# EUROPÄISCHE PATENTSCHRIFT

(11) **EP 3 274 911 B1**
(45) Veröffentlichungstag und Bekanntmachung des Hinweises auf die Patenterteilung: **09.06.2021**
(21) Anmeldenummer: 16711990.8
(22) Anmeldetag: 09.03.2016
(51) Int. Cl.: G06K 9/00, G06K 9/20

(54) **PERSONENERKENNUNGSVORRICHTUNG**
DEVICE FOR PERSON IDENTIFICATION
DISPOSITIF DE RECONNAISSANCE DE PERSONNE

(30) Priorität: 27.03.2015 DE 102015104768
(43) Veröffentlichungstag der Anmeldung: 31.01.2018
(73) Patentinhaber: Bundesdruckerei GmbH, 10969 Berlin (DE)
(72) Erfinder: WOLF, Andreas, 07743 Jena (DE); PAESCHKE, Manfred, 16348 Wandlitz (DE)
(74) Vertreter: Patentship Patentanwaltsgesellschaft mbH
(86) Internationale Anmeldenummer: PCT/EP2016/055041
(87) Internationale Veröffentlichungsnummer: WO 2016/155998

(56) Entgegenhaltungen:
- WO-A2-2015/040001
- DE-A1- 4 009 051
- US-A1- 2014 205 165
- US-B1- 6 173 068

## Beschreibung

Die vorliegende Erfindung betrifft die Erkennung einer lebenden Person.

Zur Erkennung bzw. Identifizierung von Personen können biometrische Gesichtserkennungsverfahren herangezogen werden, welche beispielsweise einen Augenabstand und/ oder andere Merkmale einer bildtechnisch erfassten Person analysieren, um die Person zu erkennen.

Nachteilig an den bekannten biometrischen Gesichtserkennungsverfahren ist jedoch, dass sie in der Regel eine lebende Person nicht von einer Personenattrappe, welche die biometrischen Merkmale einer Person aufweist, oder von einem Bild der Person unterscheiden können. Diese Unterscheidung ist jedoch notwendig, um beispielsweise bei elektronischen Zugangskontroll-Gates wie E-Gates oder ABC-Gates eine so genannte Presentation Attack Detection (PAD) durchzuführen. Hierbei wird automatisch eine Attrappen- und Lebenderkennung durchgeführt, um eine lebende Person von einer Personenpuppe oder von einem Personenbild zu unterscheiden. Hierzu kann beispielsweise, wie es in der Druckschrift DE 102007017713 A1 beschrieben ist, ein Haut-Detektor eingesetzt werden, dessen Sendedioden Infrarotstrahlung bei unterschiedlichen Sendewellenlängen in Richtung der menschlichen Haut aussenden. Die reflektierte Infrarotstrahlung wird mittels einer Empfangsdiode des Haut-Detektors detektiert und zur Lebenderkennung ausgewertet. Dieses Erkennungskonzept erfordert jedoch neben einer aktiven Beleuchtung eine Interaktion mit der Person, damit diese beispielsweise den Daumen dem Haut-Detektor zuführt. Eine derartige Interaktion ist allerdings nicht immer möglich oder praktikabel.

Die Druckschrift WO 2015/040001 A2 betrifft eine Vorrichtung zum Identifizieren einer Person. Sie zeigt in Figur 1 eine Vorrichtung zum Identifizieren einer Person mit einer Wärmebildkamera zum Erfassen eines Infrarot-Emissionsbilds des Gesichts der Person und einer Infrarotbildauswertung zum Ermitteln einer Temperaturverteilung aus den Infrarotbilddaten.

Die Druckschrift DE 40 09 051 A1 betrifft ein biometrisches Identifizierungs- und Zugangs-Kontrollsystem. Das System sieht eine Erfassung einer relativen Intensität der vom Gesicht einer zu überprüfenden Person ausgehenden Wärmestrahlung vor.

Die Druckschrift US 2014 / 205165 A1 betrifft ein Datenverwaltungssystem mit einer Sensoreinheit, welche mindestens ein Körperteil eines Lebewesens erfassen kann und einer Lebensanzeichenextraktionseinheit zum Extrahieren von Vitalzeichen des Lebewesens aus den aufgenommenen Bildern.

Es ist daher die Aufgabe der vorliegenden Erfindung, ein Konzept zur Erkennung einer lebenden Person zu schaffen, bei dem eine Interaktion mit der Person nicht notwendig ist.

Diese Aufgabe wird durch die Merkmale der unabhängigen Ansprüche gelöst. Vorteilhafte Weiterbildungsformen sind Gegenstand der abhängigen Ansprüche, der Beschreibung sowie der beiliegenden Figuren.

Die vorliegende Erfindung basiert auf der Erkenntnis, dass die obige Aufgabe auf der Basis einer Bildaufnahme einer Wärme-Emission einer Person, welche vorliegend als Wärmeaufnahme bezeichnet ist, gelöst werden kann. Durch eine Auswertung zumindest einer Wärmeinhomogenität in der Wärmeaufnahme, wie beispielsweise eines Wärmeunterschieds oder eines Wärmemusters, kann eine Personenattrappe von einer lebenden Person auch dann unterschieden werden, wenn die Temperatur der Personenattrappe einer durchschnittlichen Körpertemperatur einer Person entspricht. Die Wärmeinhomogenität kann beispielsweise durch ein Aus- oder Einatmen im Mund- oder Nasenbereich der Person oder durch einen Venenverlauf in der Gesichtshaut oder in den Augen der Person bestimmt sein. Eine Wärmeinhomogenität, welche ein Venenbild abbildet oder durch ein Venenbild verursacht ist, ist zudem für jede Person einzigartig und kann daher auch zur Identifizierung einer Person herangezogen werden.

Gemäß einem ersten Aspekt betrifft die Erfindung eine Personenerkennungsvorrichtung zum Erkennen einer lebenden Person gemäß Anspruch 1. Die Wärmebildkamera kann beispielsweise einen Wärmebildsensor aufweisen, welcher die von der Person ausgehende bzw. emittierte Wärmestrahlung erfasst. Hierbei wird die Person weder beleuchtet noch bestrahlt.

Die Wärmeinhomogenität wird beispielsweise durch eine erhöhte oder durch eine verringerte Temperatur im Gesicht der Person verursacht. So kann sich beispielsweise die Temperatur im Mundbereich der Person beim Ausatmen im Unterschied zum Einatmen erhöhen. Die Wärmeinhomogenität kann auch statisch sein und beispielsweise durch in den Venen der Person fließendes Blut verursacht sein.

Auf diese Weise ist es möglich, eine Lebenderkennung auf der Basis eines passiv erfassten Wärmebildes einer Person durchzuführen. Hierbei ist eine Interaktion mit der Person nicht notwendig. Darüber hinaus wird die Wärmeinhomogenität, die sich durch ein Venenbild bestimmt, zur Identifizierung der Person herangezogen.

Der Prozessor ist ausgebildet, den vorbestimmten Erfassungsbereich in dem Wärmebild durch einen Vergleich des Wärmebildes mit einem Weißlichtbild der Person zu erfassen. Auf diese Weise kann der Erfassungsbereich schnell und einfach bestimmt werden.

Der Prozessor ist ausgebildet, eine Entfernung der Person von der Wärmebildkamera durch eine Erfassung einer Merkmalsgeometrie der Person in dem Weißlichtbild, insbesondere eines Augenabstandes der Person, zu erfassen. Durch einen Vergleich eines Weißlichtbildes der Person, beispielsweise eines mittels einer Weißlichtkamera aufgenommenen digitalen Bildes, kann beispielsweise durch einen Vergleich von Augenabständen eine Entfernung der Person von der Wärmebildkamera erfasst werden. Hierbei kann eine Skalierung des Wärmebildes oder eines Wärmebildmusters oder einer Maske vorgenommen werden, um den Erfassungsbereich zu bestimmen.

Die Wärmebildkamera ist ausgebildet, zusätzlich das Weißlichtbild der Person aufzunehmen.

Die Wärmebildkamera ist ausgebildet, auch das Weißlichtbild der Person aufzunehmen. Mit dem Begriff "Weißlichtbild" ist ein Bild der Person im sichtbaren Lichtspektrum gemeint.

Der vorbestimmte Erfassungsbereich ist zumindest einem Wangenbereich des Gesichtsbildes der Person zugeordnet. Bei einer zeitlich veränderlichen Wärmeabstrahlung, wie es beispielsweise im Nasen- oder im Mundbereich der Fall ist, entsteht eine zeitlich veränderliche Wärmeinhomogenität, welche durch eine Serie von Wärmebildern erfasst werden kann. Im Wangen- oder im Augenbereich ist die Wärmeinhomogenität zwar statisch, jedoch aufgrund der dort verlaufenden Blutvenen personenspezifisch.

Die örtliche Wärmeinhomogenität ist zeitveränderlich, wobei der Prozessor ausgebildet ist, die lebende Person auf der Basis einer zeitlichen Änderung der örtlichen Wärmeinhomogenität zu erkennen. Eine zeitliche Änderung der Wärmeinhomogenität, welche beispielsweise durch ein Ein- und Ausatmen im Mund- oder im Nasenbereich zu erwarten ist, kann über die Zeit erfasst werden, um eine Lebenderkennung durchzuführen.

Die Wärmebildkamera ist ausgebildet, eine Serie von Wärmebildern des Gesichtsbereichs der Person aufzunehmen, wobei der Prozessor ausgebildet ist, in der Serie von Wärmebildern eine zeitliche Änderung der örtlichen Wärmeinhomogenität zu erfassen, um die lebende Person zu erkennen. Die Serie von Wärmebildern kann beispielsweise innerhalb eines vorbestimmten Zeitintervalls, beispielsweise innerhalb einer, zwei, drei, vier, fünf, zehn oder zwanzig Sekunden, aufgenommen sein, um eine örtliche Änderung der Wärmeinhomogenität, beispielsweise durch Ein- oder Ausatmen, zu erfassen. Eine durchschnittliche Dauer eines Atemzugs bei einem Erwachsenen beträgt zwischen 4 und 5 Sekunden, sodass das vorbestimmte Zeitintervall auch ein Vielfaches dieser Dauer sein kann. Auf diese Weise ist eine besonders einfache Lebenderkennung möglich.

Der Prozessor ist ausgebildet, ein Wärmemuster in dem vorbestimmten Erfassungsbereich zu detektieren. Gemäß einer Ausführungsform ist der Prozessor ausgebildet, das detektierte Wärmemuster mit einem Wärmereferenzmuster zu vergleichen, um bei einer Übereinstimmung des Wärmemusters mit dem Wärmereferenzmuster die Person zu identifizieren. Das Wärmemuster kann beispielsweise durch eine örtliche Wärmeverteilung festgelegt sein, welche personenspezifisch ist. Eine derartige Wärmeverteilung kann beispielsweise durch einen Venenverlauf bestimmt sein. Auf diese Weise ist es möglich, nicht nur eine Lebenderkennung durchzuführen, sondern auch die Person zu identifizieren.

Der vorbestimmte Erfassungsbereich ist ein Wangenbereich der Person, wobei das Wärmemuster einen Venenverlauf in dem Wangenbereich zeigt. Allgemein gesagt kann das Wärmemuster durch eine personenspezifische Wärmeverteilung gegeben sein, welche durch beispielsweise einen Blutverlauf in den Venen oder durch ein spezifisches Wärmebild, beispielsweise aufgrund einer spezifischen Lage von Venen, bestimmt ist.

Gemäß einer Ausführungsform umfasst die Erkennungsvorrichtung eine Kommunikationsschnittstelle, um das Wärmereferenzmuster zu empfangen, und/oder einen Speicher zum Speichern von Wärmereferenzmustern unterschiedlicher Personen. Das Wärmereferenzmuster kann beispielsweise von einem Identifikationsserver, beispielsweise einem eID-Server, über ein Kommunikationsnetzwerk abgerufen werden, wie es beispielsweise bei einem Abgleich von biometrischen Merkmalen der Fall ist. Hierbei kann ein sicherer Kanal zu dem Identifikationsserver unter Verwendung einer kryptographischen Kommunikationsverschlüsselung aufgebaut werden, um das Wärmereferenzbild abzurufen. Die Datenbank kann jedoch auch lokal in dem Speicher abgelegt sein oder zwischengespeichert werden.

Durch eine Erfassung der Wärmeemission der Person wird auf eine zusätzliche Beleuchtung der Person verzichtet. Die Wärmeaufnahme kann auf diese Weise ohne eine Interaktion mit der Person durchgeführt werden.

Gemäß einer Ausführungsform ist der Prozessor ausgebildet, bei Fehlen der örtlichen Wärmeinhomogenität eine Maskierung einer Person oder eine nicht lebende Personenattrappe zu detektieren. Auf diese Weise wird eine einfache Möglichkeit einer Erkennung eines PAD-Angriffs bereitgestellt.

Gemäß einem zweiten Aspekt betrifft die Erfindung ein Verfahren zum Erkennen einer lebenden Person gemäß Anspruch 5.

Das Verfahren kann, wie es im Zusammenhang mit der Personenerkennungsvorrichtung beschrieben ist, ausgeführt werden. Das Verfahren kann insbesondere mittels der Personenerkennungsvorrichtung ausgeführt werden.

Gemäß einer Ausführungsform umfasst das Verfahren das Detektieren eines Wärmemusters in dem vorbestimmten Erfassungsbereich und das Vergleichen des detektierten Wärmemusters mit einem Wärmereferenzmuster, um die Person zu identifizieren. Das Verfahren wird auch zur Personenidentifizierung durchgeführt.

Weitere Ausführungsbeispiele der Erfindung werden unter Bezugnahme auf die beiliegenden Figuren näher erläutert. Es zeigen:
- Fig. 1: ein Wärmebild gemäß einer Ausführungsform;
- Fig. 2a und Fig. 2b: Wärmebilder gemäß einer Ausführungsform;
- Fig. 3: ein Blockdiagramm einer Personenerkennungsvorrichtung gemäß einer Ausführungsform; und
- Fig. 4: ein Wärmebildmuster.

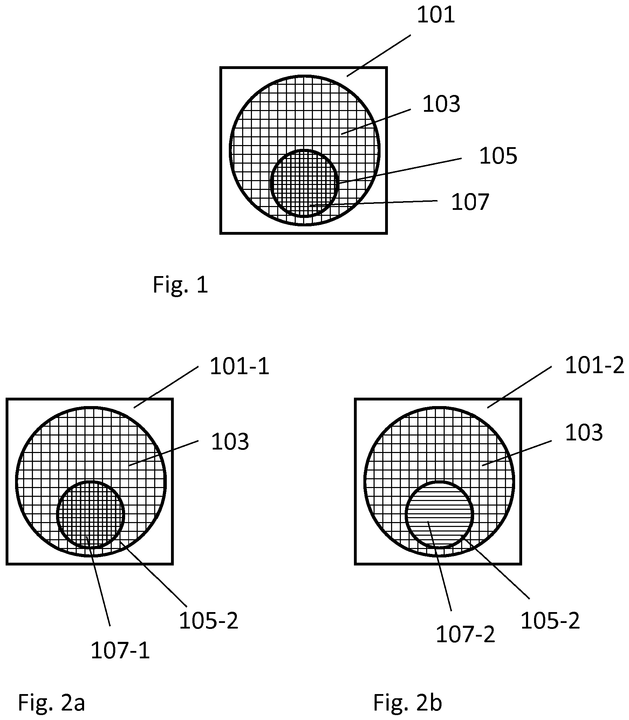

Fig. 1 zeigt ein Wärmebild 101 eines schematisch durch einen Kreis dargestellten Gesichtsbereichs 103 einer Person. Das Wärmebild 101 umfasst ferner einen Erfassungsbereich 105, welcher eine Wärmeinhomogenität 107 umfasst. Die Wärmeinhomogenität 107 ist in einem Temperaturunterschied in dem Wärmebild 101 zurückzuführen. Die Wärmeinhomogenität 107 ist zudem örtlich, d.h. sie ist an einer vorbestimmten geometrischen Position im Gesichtsbereich 103 angeordnet. In dem in Fig. 1 beispielhaft dargestellten Ausführungsbeispiel ist die Wärmeinhomogenität 107 beispielsweise in einem Mundbereich einer Person angeordnet. Die Inhomogenität 107 kann jedoch in einem Wangenbereich, einem Augenbereich, einem Nasenbereich, einem Stirnbereich oder einem Ohrenbereich der Person angeordnet sein.

Anhand des in Fig. 1 dargestellten Personenbildes kann bereits eine etwaige Maskierung einer Person durchgeführt werden, weil beispielsweise eine ein Gesicht verdeckende Maske etwaige Wärmeinhomogenitäten zumindest teilweise auflöst.

Die örtliche Wärmeinhomogenität 107 kann zeitlich konstant sein. Dies ist beispielsweise dann der Fall, wenn die Wärmeinhomogenität 107 durch einen Blutfluss in den Venen einer Person bewirkt wird. Die örtliche Wärmeinhomogenität 107 kann jedoch bezüglich der Temperatur zeitlich veränderlich sein, wie es in den Fig. 2a und 2b dargestellt ist.

In den Fig. 2a und 2b sind Wärmebilder 101-1 und 101-2 dargestellt, welche zu unterschiedlichen Zeitpunkten, beispielsweise aufeinanderfolgend, in Serie aufgenommen worden sind. In dem in Fig. 2a dargestellten Wärmebild 101-1 zeichnet sich die Wärmeinhomogenität 107-1 beispielsweise durch eine niedrigere Temperatur aus als die in Fig. 2b dargestellte Wärmeinhomogenität 107-2. Die Wärmeinhomogenität 107-1 kann beispielsweise durch ein Einatmen und die Wärmeinhomogenität 107-2 kann beispielsweise durch ein Ausatmen im Mundbereich der Person entstehen, wodurch zu unterschiedlichen Zeitpunkten unterschiedliche Temperaturen der Wärmeinhomogenität 107 resultieren.

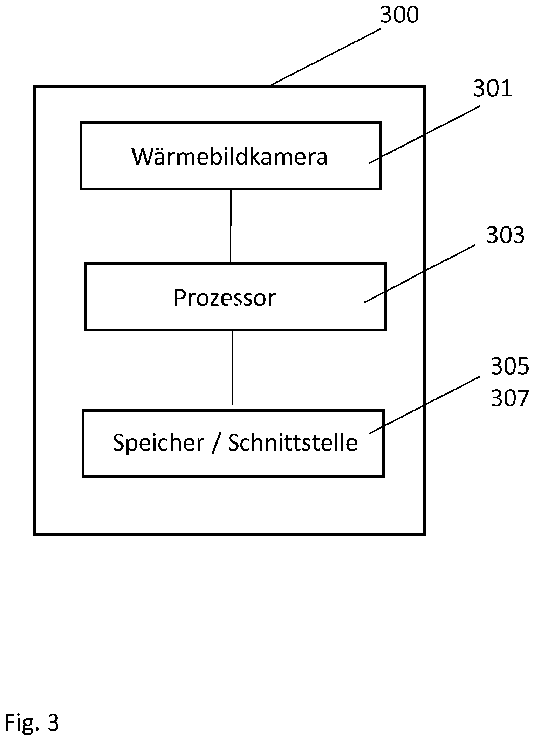

Fig. 3 zeigt ein schematisches Blockbild einer Personenerkennungsvorrichtung 300 zum Erkennen einer lebenden Person mit einer Wärmebildkamera 301, welche ausgebildet ist, ein Wärmebild eines Gesichtsbereichs der Person aufzunehmen, einen Prozessor 303, welcher ausgebildet ist, eine örtliche Wärmeinhomogenität, beispielsweise die Wärmeinhomogenität 107, in einem vorbestimmten Erfassungsbereich, beispielsweise in dem Erfassungsbereich 105 des Wärmebildes 101 zu detektieren, um die lebende Person zu erkennen.

Die Personenerkennungsvorrichtung 300 ist beispielsweise eingerichtet, um die in den Fig. 1 sowie 2a und 2b dargestellten Wärmebilder 101, 101-1, 101-2 aufzunehmen.

Die Lebenderkennung kann aufgrund des Vorhandenseins bzw. der Detektion der Wärmeinhomogenität 107 in einer Serie von Wärmebildern, wie sie in den Fig. 2a und 2b dargestellt ist, erfolgen.

Der Prozessor 303 ist ausgebildet, eine Person auf der Basis des Wärmebildes, insbesondere auf der Basis der Wärmeinhomogenität und eines durch die Wärmeinhomogenität festgelegten Wärmemusters zu erkennen.

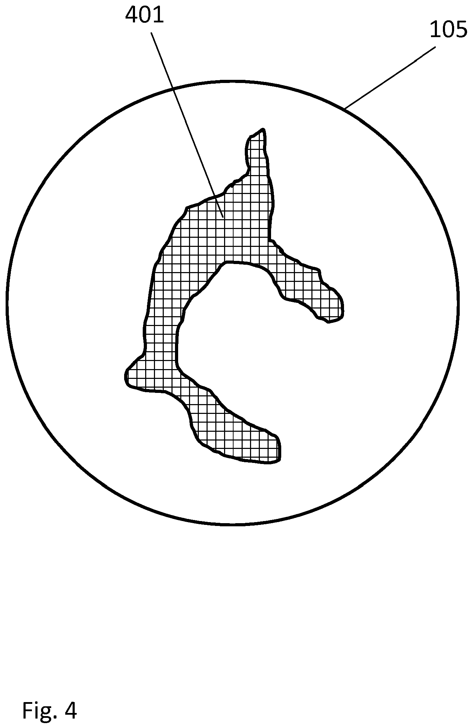

In Fig. 4 ist ein beispielhaftes Wärmebildmuster 401 dargestellt, welches in dem Erfassungsbereich 105 angeordnet ist. Das Wärmebildmuster 401 kann beispielsweise durch einen Venenverlauf in einem Wangenbereich oder in einem Augenbereich der Person festgelegt sein. Dadurch ist das Wärmbildmuster 401 personenspezifisch und kann zu einer Identifikation der Person herangezogen werden. Das Wärmebildmuster 401 ist, mit anderen Worten ausgedrückt, ein weiteres biometrisches Merkmal der Person, das zu deren Identifizierung herangezogen werden kann. Hierzu kann der Prozessor 303 ausgebildet sein, das Wärmebildmuster 401 mit einem Wärmereferenzmuster der Person zu vergleichen, um die Person zu identifizieren. Das Wärmereferenzmuster kann beispielsweise in einem Speicher 305 der Personenerkennungsvorrichtung 300 abgelegt sein. Gemäß einer Ausführungsform kann das Wärmereferenzmuster über eine Schnittstelle 307 der Personenerkennungsvorrichtung über ein Kommunikationsnetzwerk von einem Identifikationsserver abgerufen werden. Der Identifikationsserver kann beispielsweise ein eID-Server sein, welcher biometrische Referenzmuster bereitstellt.

Gemäß einer Ausführungsform kann die Personenerkennungsvorrichtung 300 ein konventionelles Gesichtserkennungssystem umfassen mit einer in Fig. 3 nicht dargestellten Bildkamera, welche ausgebildet sein kann, ein Weißlichtbild der Person im sichtbaren Lichtspektrum zu erzeugen. Die Wärmebildkamera ist selbst ausgebildet, ein derartiges Weißlichtbild aufzunehmen. Hierbei wird eine Entfernungsschätzung durchgeführt, welche beispielsweise auf der Basis eines Vergleichs von Augenabständen realisiert werden kann. Auf diese Weise erkennt der Prozessor 303, dass in dem Wärmebild ein Gesicht der Person im Infrarotspektrum abgebildet ist. Auf der Basis einer Serie von Bildern, welche beispielsweise eine vorbestimmte Bildwiederholungsrate, beispielsweise ein Bild pro Sekunde, aufweisen, werden auf den Wangen Gefäße detektiert, welche nicht nur zur Lebenderkennung, sondern auch zur Identifizierung der Person herangezogen werden.

Darüber hinaus kann der Prozessor 303 ausgebildet sein, einen Übergang zur Inhomogenität 107 zu detektieren, um die Inhomogenität 107 zu erfassen. Derartige Übergänge sind insbesondere um die Augen, um die Nase, um den Mund sowie auf der Stirn der Person zu erwarten.

Gemäß einer Ausführungsform kann die Personenerkennungsvorrichtung 300 an einem e-Gate bzw. in einem ABC-Gate neben einer Weißlichtbildkamera für die Gesichtserkennung angeordnet sein. Die Wärmebildkamera 301 kann beispielsweise durch einen Bolometer-Sensor realisiert werden.

Gemäß einer Ausführungsform kann die Wärmebildkamera 301 eine Auflösung aufweisen, welche einer VGA-Auflösung entspricht oder höher ist.

Gemäß einer Ausführungsform ist die Wärmebildkamera 301 anhand eines Weißlichtbildes der Person ausrichtbar, um den Gesichtsbereich aufzunehmen. Die Steuerung der Ausrichtung der Wärmebildkamera 301 kann der Prozessor 303 übernehmen. Hierbei kann die Wärmebildkamera 301 auf einem schwenkbaren Stativ montiert sein.

Gemäß einer Ausführungsform kann der Gesichtsbereich durch einen Hand-Bereich ersetzt werden, bei dem beispielweise ein Venenverlauf in einer Hand oder in einem Finger wärmetechnisch erfasst wird, um eine Person zu identifizieren.

Ein Vorteil der Verwendung der Wärmebildkamera 301 ist die Passivität. Es erfolgt kein Energieeintrag etwa ins Auge einer Person, was die Akzeptanz der Benutzer für Retinaerkennung (NIR-Eintrag ins Auge zur Beleuchtung der Netzhaut) und Iriserkennung (NIR-Beleuchtung des Auges) im Vergleich zu herkömmlichen Verfahren, bei welchen eine Person aktiv beleuchtet wird, erhöhen kann.

Gemäß einer Ausführungsform kann die Identifikation der Person anhand der Wärmeaufnahme mit einer biometrischen Identifikation im gleichen Sensor, beispielsweise in der Personenerkennungsvorrichtung 300, durchgeführt werden. Hierbei kann der Prozessor 303 zusätzlich die biometrische Identifikation durchführen.

Gemäß einer Ausführungsform kann die Personenerkennungsvorrichtung 300 in einem Zugangsbereich, beispielsweise in einem e-Gate oder in einem ABC-Gate angeordnet sein. Die Wärmekamera 301 kann durch einen Bolometer gebildet und an einer Tür angebracht werden, vor dem sich Einlass Begehrende passend positionieren können, um beispielsweise eine Wange in Richtung der Wärmekamera 301 auszurichten. Abhängig vom Ergebnis eines Vergleichs des aufgenommenen Wärmebildmusters kann die Tür aufgehen oder verschlossen bleiben, wie es bei biometrischen Zugangskontrollen an sich bekannt ist.

Gemäß einer Ausführungsform kann die Identifikation der Person anhand des Wärmebildmusters daher zusätzlich zu einer biometrischen Identifikation eingesetzt werden.

### Bezugszeichenliste

- 101: Wärmebild
- 103: Gesichtsbereich
- 105: Erfassungsbereich
- 107: Wärmeinhomogenität
- 300: Personenerkennungsvorrichtung
- 301: Wärmebildkamera
- 303: Prozessor
- 305: Speicher
- 307: Schnittstelle
- 401: Wärmebildmuster

## Patentansprüche

1. Personenerkennungsvorrichtung (300) zum Erkennen einer lebenden Person, mit:
einer Wärmebildkamera (301), welche ausgebildet ist, ein Wärmebild eines Gesichtsbereichs (103) der Person aufzunehmen; und
einem Prozessor (303), welcher ausgebildet ist, eine örtliche Wärmeinhomogenität (107) in einem vorbestimmten Erfassungsbereich (105) des Wärmebildes zu detektieren, um die lebende Person zu erkennen,
wobei die Wärmebildkamera (301) ausgebildet ist, zusätzlich ein Weißlichtbild der Person aufzunehmen,
wobei die örtliche Wärmeinhomogenität (107) zeitveränderlich ist, wobei der Prozessor (303) ausgebildet ist, die lebende Person auf der Basis einer zeitlichen Änderung der örtlichen Wärmeinhomogenität (107) zu erkennen,
wobei die Wärmebildkamera (301) ausgebildet ist, eine Serie von Wärmebildern des Gesichtsbereichs (103) der Person aufzunehmen, wobei der Prozessor (303) ausgebildet ist, in der Serie von Wärmebildern eine zeitliche Änderung der örtlichen Wärmeinhomogenität (107) zu erfassen, um die lebende Person zu erkennen,
wobei der Prozessor (303) ausgebildet ist, ein Wärmemuster, welches die örtliche Wärmeinhomogenität darstellt, in dem vorbestimmten Erfassungsbereich (105) zu detektieren, wobei der vorbestimmte Erfassungsbereich ein Wangenbereich der Person ist, und wobei das Wärmemuster einen Gefäßverlauf in dem Wangenbereich zeigt,
wobei das Erfassen der zeitlichen Änderung der örtlichen Wärmeinhomogenität (107) ein Detektieren von Gefäßen auf den Wangen der Person umfasst und der Prozessor ausgebildet ist, neben einer Lebenderkennung der Person auch eine Identifizierung der Person anhand der Detektion der Wangengefäße durchzuführen,
wobei der Prozessor (303) ausgebildet ist, den vorbestimmten Erfassungsbereich (105) in dem Wärmebild durch einen Vergleich des Wärmebildes mit dem Weißlichtbild der Person zu erfassen,
wobei der Prozessor (303) ausgebildet ist, eine Entfernung der Person von der Wärmebildkamera (301) durch eine Erfassung einer Merkmalsgeometrie der Person in dem Weißlichtbild, insbesondere eines Augenabstandes der Person, zu erfassen und auf diese Weise zu erkennen, dass in dem Wärmebild ein Gesicht der Person im Infrarotspektrum abgebildet ist.

2. Erkennungsvorrichtung nach Anspruch 1, wobei der Prozessor (303) ausgebildet ist, ein Wärmemuster in dem vorbestimmten Erfassungsbereich (105) zu detektieren, und das detektierte Wärmemuster mit einem Wärmereferenzmuster zu vergleichen, um bei einer Übereinstimmung des Wärmemusters mit dem Wärmereferenzmuster die Person zu identifizieren.

3. Erkennungsvorrichtung nach Anspruch 2, welche ferner eine Kommunikationsschnittstelle (307) aufweist, um das Wärmereferenzmuster zu empfangen, oder welcher einen Speicher (305) zum Speichern von Wärmereferenzmustern unterschiedlicher Personen umfasst.

4. Personenerkennungsvorrichtung (300) nach einem der vorstehenden Ansprüche, wobei der Prozessor (303) ausgebildet ist, bei Fehlen der örtlichen Wärmeinhomogenität (107) eine Maskierung einer Person oder eine nicht-lebende Attrappe zu detektieren.

5. Verfahren zum Erkennen einer lebenden Person, mit:
Aufnehmen eines Wärmebildes (101) eines Gesichtsbereichs (103) der Person durch eine Wärmebildkamera;
Detektieren einer örtlichen Wärmeinhomogenität (107) in einem vorbestimmten Erfassungsbereich (105) des Wärmebildes (101), um die lebende Person zu erkennen, wobei die Wärmebildkamera (301) ausgebildet ist, zusätzlich ein Weißlichtbild der Person aufzunehmen,
wobei die örtliche Wärmeinhomogenität (107) zeitveränderlich ist;
Erkennen der lebenden Person auf der Basis einer zeitlichen Änderung der örtlichen Wärmeinhomogenität (107);
Aufnehmen einer Serie von Wärmebildern des Gesichtsbereichs (103) der Person durch die Wärmebildkamera (301); und
Erfassen einer zeitlichen Änderung der örtlichen Wärmeinhomogenität (107) in der Serie von Wärmebildern, um die lebende Person zu erkennen,
Detektieren eines Wärmemusters, welches die örtliche Wärmeinhomogenität darstellt, in dem vorbestimmten Erfassungsbereich (105), wobei der vorbestimmte Erfassungsbereich ein Wangenbereich der Person ist, und wobei das Wärmemuster einen Gefäßverlauf in dem Wangenbereich zeigt,
wobei das Erfassen der zeitlichen Änderung der örtlichen Wärmeinhomogenität (107) ein Detektieren von Gefäßen auf den Wangen der Person umfasst und das Verfahren neben einer Lebenderkennung der Person auch eine Identifizierung der Person anhand der Detektion der Wangengefäße durchführt,
Erfassen des vorbestimmten Erfassungsbereichs (105) in dem Wärmebild durch einen Vergleich des Wärmebildes mit dem Weißlichtbild der Person,
Erfassen einer Entfernung der Person von der Wärmebildkamera (301) durch eine Erfassung einer Merkmalsgeometrie der Person in dem Weißlichtbild, insbesondere eines Augenabstandes der Person, und auf diese Weise Erkennen, dass in dem Wärmebild ein Gesicht der Person im Infrarotspektrum abgebildet ist.

6. Verfahren nach Anspruch 5, mit:
Detektieren eines Wärmemusters in dem vorbestimmten Erfassungsbereich (105); und
Vergleichen des detektierten Wärmemusters mit einem Wärmereferenzmuster, um die Person zu identifizieren.

7. Computerprogramm mit einem Programmcode zum Ausführen des Verfahrens nach Anspruch 5 oder 6, wenn das Computerprogramm mittels einer Datenverarbeitungsanlage ausgeführt wird.

## Claims

1. An identification device for persons (300) for identifying a living person, the identification device for persons comprising:
a thermal imaging camera (301) which is configured to record a thermal image of a facial area (103) of the person; and
a processor (303) which is configured to detect a local thermal inhomogeneity (107) in a predetermined detection area (105) of the thermal image in order to identify the living person,
wherein the thermal imaging camera (301) is configured to additionally record a white light image of the person,
wherein the local thermal inhomogeneity (107) is time-varying, wherein the processor (303) is configured to recognize the living person on the basis of a change of the local thermal inhomogeneity (107) overtime,
wherein the thermal imaging camera (301) is configured to record a series of thermal images of the facial area (103) of the person, wherein the processor (303) is configured to detect a change of the local thermal inhomogeneity (107) over time in the series of thermal images in order to identify the living person,
wherein the processor (303) is configured to detect in the predetermined detection area (105) a thermal pattern which represents the local thermal inhomogeneity, wherein the predetermined detection area (105) is a cheek area of the person and wherein the thermal pattern indicates a vessel course in the cheek area,
wherein the detection of the change of the local thermal inhomogeneity (107) over time comprises a detection of vessels on the cheeks of the person and wherein the processor is configured to also perform an identification of the person based on the detection of the cheek vessels in addition to a liveness detection of the person,
wherein the processor (303) is configured to detect the predetermined detection area (105) in the thermal image by a comparison of the thermal image with the white light image of the person,
wherein the processor (303) is configured to detect a distance of the person from the thermal imaging camera (301) by detecting a feature geometry of the person in the white light image, in particular an eye distance of the person, and to identify in this way that a face of the person is imaged in the infrared spectrum in the thermal image.

2. The identification device according to claim 1, wherein the processor (303) is configured to detect a thermal pattern in the predetermined detection area (105) and to compare the detected thermal pattern with a thermal reference pattern in order to identify the person, if a match between the thermal pattern and the thermal reference pattern occurs.

3. The identification device according to claim 2, further comprising a communication interface (307) to receive the thermal reference pattern, or which comprises a memory (305) for storing thermal reference patterns of different persons.

4. The identification device for persons (300) according to one of the preceding claims, wherein the processor (303) is configured to detect a masking of a person or a non-living dummy in the absence of the local thermal inhomogeneity (107).

5. A method for identifying a living person, the method comprising:
recording a thermal image (101) of a facial area (103) of the person by a thermal imaging camera;
detecting a local thermal inhomogeneity (107) in a predetermined detection area (105) of the thermal image (101) in order to identify the living person,
wherein the thermal imaging camera (301) is configured to additionally record a white light image of the person,
wherein the local thermal inhomogeneity (107) is time-varying;
identifying the living person on the basis of a change of the local thermal inhomogeneity (107) over time;
recording a series of thermal images of the facial area (103) of the person by the thermal imaging camera (301); and
detecting a change over time of the local thermal inhomogeneity (107) in the series of thermal images in order to identify the living person,
detecting in the predetermined detection area (105) a thermal pattern which represents the local thermal inhomogeneity, wherein the predetermined detection area is a cheek area of the person, and wherein the thermal pattern indicates a vessel course in the cheek area,
wherein the detection of the change of the local thermal inhomogeneity (107) over time comprises a detection of vessels on the cheek area of the person and wherein the method also performs an identification of the person based on the detection of the cheek vessels in addition to a liveness detection of the person,
detecting the predetermined detection area (105) in the thermal image by a comparison of the thermal image with the white light image of the person,
detecting a distance of the person from the thermal imaging camera (301) by detecting a feature geometry of the person in the white light image, in particular an eye distance of the person, and identify in this way that a face of the person is imaged in the infrared spectrum in the thermal image.

6. The method according to claim 5, comprising:
detecting a thermal pattern in the predetermined detection area (105); and
comparing the detected thermal pattern with a thermal reference pattern in order to identify the person.

7. A computer program with a program code for executing the method according to claim 5 or 6, when the computer program is executed by a data processing system.

## Revendications

1. Dispositif de reconnaissance de personne (300) destiné à reconnaître une personne vivante, comprenant :
une caméra d'imagerie thermique (301), qui est configurée pour capturer une image thermique d'une zone de visage (103) de la personne ; et
un processeur (303), qui est configuré pour détecter une inhomogénéité thermique locale (107) dans une zone d'acquisition (105) prédéterminée de l'image thermique en vue de reconnaître la personne vivante,
la caméra d'imagerie thermique (301) étant configurée pour capturer en plus une image en lumière blanche de la personne,
l'inhomogénéité thermique locale (107) étant variable dans le temps, le processeur (303) étant configuré pour reconnaître la personne vivante sur la base d'une variation dans le temps de l'inhomogénéité thermique locale (107),
la caméra d'imagerie thermique (301) étant configurée pour capturer une série d'images thermiques de la zone de visage (103) de la personne, le processeur (303) étant configuré pour acquérir, dans la série d'images thermiques, une variation dans le temps de l'inhomogénéité thermique locale (107) en vue de reconnaître la personne vivante,
le processeur (303) étant configuré pour détecter un modèle thermique, lequel représente l'inhomogénéité thermique locale, dans la zone d'acquisition (105) prédéterminée, la zone d'acquisition prédéterminée étant une zone des joues de la personne et le modèle thermique indiquant un tracé des vaisseaux sanguins dans la zone des joues,
l'acquisition de la variation dans le temps de l'inhomogénéité thermique locale (107) comprenant une détection de vaisseaux sanguins sur les joues de la personne et le processeur étant configuré pour, outre une reconnaissance de l'état vivant de la personne, effectuer également une identification de la personne à l'aide de la détection des vaisseaux sanguins des joues,
le processeur (303) étant configuré pour acquérir la zone d'acquisition (105) prédéterminée dans l'image thermique par une comparaison de l'image thermique avec l'image en lumière blanche de la personne,
le processeur (303) étant configuré pour acquérir un éloignement de la personne de la caméra d'imagerie thermique (301) par une acquisition d'une géométrie caractéristique de la personne dans l'image en lumière blanche, notamment un écart entre les yeux de la personne,
et pour reconnaître ainsi qu'un visage de la personne dans le spectre infrarouge est représenté dans l'image thermique.

2. Dispositif de reconnaissance selon la revendication 1, le processeur (303) étant configuré pour détecter un modèle thermique dans la zone d'acquisition (105) prédéterminée, et pour comparer le modèle thermique détecté avec un modèle de référence thermique afin d'identifier la personne dans le cas d'une concordance entre le modèle thermique et le modèle de référence thermique.

3. Dispositif de reconnaissance selon la revendication 2, lequel possède en outre une interface de communication (307) en vue de recevoir le modèle de référence thermique, ou lequel comporte une mémoire (305) destinée à mémoriser des modèles de référence thermiques de différentes personnes.

4. Dispositif de reconnaissance de personne (300) selon l'une des revendications précédentes, le processeur (303) étant configuré, en cas d'absence de l'inhomogénéité thermique locale (107), pour détecter un masquage d'une personne ou un leurre non vivant.

5. Procédé de reconnaissance d'une personne vivante, comprenant :
capture d'une image thermique (101) d'une zone de visage (103) de la personne par une caméra d'imagerie thermique (301) ;
détection d'une inhomogénéité thermique locale (107) dans une zone d'acquisition (105) prédéterminée de l'image thermique (101) en vue de reconnaître la personne vivante, la caméra d'imagerie thermique (301) étant configurée pour capturer en plus une image en lumière blanche de la personne,
l'inhomogénéité thermique locale (107) étant variable dans le temps ;
reconnaissance de la personne vivante sur la base d'une variation dans le temps de l'inhomogénéité thermique locale (107) ;
capture d'une série d'images thermiques de la zone de visage (103) de la personne par la caméra d'imagerie thermique (301) ; et
acquisition, dans la série d'images thermiques, d'une variation dans le temps de l'inhomogénéité thermique locale (107) en vue de reconnaître la personne vivante, détection d'un modèle thermique, lequel représente l'inhomogénéité thermique locale, dans la zone d'acquisition (105) prédéterminée, la zone d'acquisition prédéterminée étant une zone des joues de la personne et le modèle thermique indiquant un tracé des vaisseaux sanguins dans la zone des joues,
l'acquisition de la variation dans le temps de l'inhomogénéité thermique locale (107) comprenant une détection de vaisseaux sanguins sur les joues de la personne et le procédé, outre une reconnaissance de l'état vivant de la personne, effectuant également une identification de la personne à l'aide de la détection des vaisseaux sanguins des joues,
acquisition de la zone d'acquisition (105) prédéterminée dans l'image thermique par une comparaison de l'image thermique avec l'image en lumière blanche de la personne, acquisition d'un éloignement de la personne de la caméra d'imagerie thermique (301) par une acquisition d'une géométrie caractéristique de la personne dans l'image en lumière blanche, notamment un écart entre les yeux de la personne, et ainsi reconnaissance qu'un visage de la personne dans le spectre infrarouge est représenté dans l'image thermique.

6. Procédé selon la revendication 5, comprenant :
détection d'un modèle thermique dans la zone d'acquisition (105) prédéterminée ; et
comparaison du modèle thermique détecté avec un modèle de référence thermique afin d'identifier la personne.

7. Programme informatique comprenant un code de programme destiné à mettre en œuvre le procédé selon la revendication 5 ou 6 lorsque le programme informatique est exécuté au moyen d'un équipement de traitement de données.
